(19) Europäisches Patentamt
European Patent Office
Office européen des brevets

(11) **EP 1 939 675 A2**

(12) **EUROPEAN PATENT APPLICATION**

(43) Date of publication:
**02.07.2008 Bulletin 2008/27**

(51) Int Cl.:
*G02F 1/1362* (2006.01)  *G02F 1/1368* (2006.01)

(21) Application number: **07023949.6**

(22) Date of filing: **11.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **27.12.2006 JP 2006350966**

(71) Applicant: **Seiko Epson Corporation**
**Shinjuku-ku,**
**Tokyo 163-0811 (JP)**

(72) Inventors:
• **Kenmochi, Nobuhiko**
**Suwa-shi**
**Nagano-ken 392-8502 (JP)**
• **Miyasaka, Mitsutoshi**
**Suwa-shi**
**Nagano-ken 392-8502 (JP)**

(74) Representative: **HOFFMANN EITLE**
**Patent- und Rechtsanwälte**
**Arabellastrasse 4**
**81925 München (DE)**

(54) **Liquid crystal device and electronic apparatus**

(57) A liquid crystal device includes: a first scan line; a second scan line arranged in parallel with the first scan line; a signal line arranged to intersect with the first scan line; a pixel arranged in a matrix with respect to an intersection between the first scan line and the signal line, the pixel including: a first transistor having a gate coupled to the first scan line, a source, and a drain, one of the source and the drain being coupled to the signal line; a pixel electrode coupled to the other of the source and the drain of the first transistor; a common electrode disposed facing to the pixel electrode; a liquid crystal layer disposed between the pixel electrode and the common electrode; a second transistor having a gate coupled to the second scan line, a source, and a drain, one of the source and the drain being coupled to the other of the source and the drain of the first transistor, and the other of the source and the drain being coupled to a power source line; and a first light-shielding film covering one side of the first transistor and the second transistor.

FIG. 1

EP 1 939 675 A2

**Description**

BACKGROUND

1. Technical Field

The present invention relates to a liquid crystal device and an electronic apparatus.

2. Related Art

Recently, to enable an optical input to a display area, a liquid crystal device provided with a photoelectric conversion function included in a pixel in a matrix layout on a display has been suggested (e.g. JP-A-2001-292276, and JP-A-2006-3857).

In the liquid crystal device as above, the pixel having the photoelectric conversion function stated above is composed of a pin diode or the like and a plurality of transistors.

Accordingly, a display that is used to display images only can now be used as an input device.

However, a liquid crystal device capable of an optical input in related art requires five to seven switching transistors and a pin diode disposed on each pixel as shown in JP-A-2001-292276 (especially Fig. 2), and JP-A-2006-3857 (especially Fig. 3).

When comparing a common liquid crystal device incapable of an optical input with a liquid crystal device capable of an optical input, each pixel in the liquid crystal device capable of an optical input each pixel requires an extremely large number of elements (transistors and a pin diode) each pixel while each pixel in the common liquid crystal device incapable of an optical input needs only one transistor without a pin diode.

This large numbers of elements in a pixel of the liquid crystal device capable of an optical input causes a complicated structure, reducing an aperture ratio of each pixel, darkening displayed images, and deteriorating quality of images with lowered contrast.

SUMMARY

An advantage of the invention is to provide a simple pixel structure in a liquid crystal device capable of an optical input, accompanied with enhancing quality of images.

A liquid crystal device according to a first aspect of the invention includes: a first scan line; a second scan line arranged in parallel with the first scan line; a signal line arranged to intersect with the first scan line; a pixel arranged in a matrix with respect to an intersection between the first scan line and the signal line, the pixel including: a first transistor having a gate coupled to the first scan line, a source, and a drain, one of the source and the drain being coupled to the signal line; a pixel electrode coupled to the other of the source and the drain of the first transistor; a common electrode disposed facing to the pixel electrode; a liquid crystal layer disposed between the pixel electrode and the common electrode; a second transistor having a gate coupled to the second scan line, a source, and a drain, one of the source and the drain being coupled to the other of the source and the drain of the first transistor, and the other of the source and the drain being coupled to a power source line; and a first light-shielding film covering one side of the first transistor and the second transistor.

In the liquid crystal device as above, an off current occurs because the first transistor is exposed to light. Then, the first transistor is made to be in an off state while the second transistor is scanned so as to be in an on state sequentially. In this state, by detecting the off current, a position of the first transistor whose off current is large, and the size of the off current are detectable, providing a signal based on these.

Therefore, according to the liquid crystal device of the first aspect of the invention, a liquid crystal device enabling both an optical input and an image display is realized. Further, the configuration of each pixel is simplified, thereby providing an advantageous effect improving image quality when the image is displayed.

In this case, the liquid crystal device according to the first aspect of the invention may include a second light-shielding film covering the other side of the second transistor, while a light shielding member is not present on the other side of the first transistor.

By employing the configuration above, light from the other side enters to the first transistor without being blocked, while decrease of light detecting sensitivity due to light leak of the second transistor is prevented.

A liquid crystal device according to a second aspect of the invention includes: a first scan line; a second scan line arranged in parallel with the first scan line; a signal line arranged to intersect with the first scan line; a pixel arranged in a matrix with respect to an intersection between the first scan line and the signal line, the pixel including: a first transistor having a gate coupled to the first scan line, a source, and a drain, one of the source and the drain being coupled to the signal line; a pixel electrode coupled to the other of the source and the drain of the first transistor; a common electrode disposed facing to the pixel electrode; a liquid crystal layer disposed between the pixel electrode and the common electrode; a second transistor having a gate coupled to the second scan line, a source, and a drain, one of the source and the drain being coupled to the other of the source and the drain of the first transistor, and the other of the source and the drain being coupled to a power source line; a third transistor coupled to the first transistor in series between the signal line and the pixel electrode, the third transistor having a gate coupled to the first scan line, a source, and a drain, one of the source and the drain being coupled to the other of the source and the drain of the first transistor, and the other of the source and the drain coupled to the pixel electrode; and a first light-shielding film covering one side of the first transistor, the second transistor, and the third transistor.

In the liquid crystal device according to the second aspect of the invention, an off current occurs because the first transistor is exposed to light. Then, the first transistor is made to be in an off state while the second transistor is scanned so as to be in an on state sequentially. In this state, by detecting the off current, a position of the first transistor whose off current is large, and the size of the off current are detectable, providing a signal based on these.

Therefore, according to the liquid crystal device of the second aspect of the invention, a liquid crystal device enabling both an optical input and an image display is realized. Further, the configuration of each pixel is simplified, thereby providing an advantageous effect improving image quality when the image is displayed.

Further, the liquid crystal device according to the second aspect of the invention may include a second light-shielding film covering the other side of the second transistor and the third transistor, while a light shielding member is not present on the other side of the first transistor. In the configuration as above, the third transistor coupled in series to the first transistor between the signal line and the pixel electrode is provided. The other side of the third transistor is covered with the second light-shielding film. Therefore, even when the first transistor is exposed to light, the light does not enter to the third transistor, realizing perfect switching at the third transistor when an image is displayed. Accordingly, the light from the other side enters the first transistor without being blocked, thereby being used as a photo sensor at the optical input. In addition, since the second transistor is sandwiched between the first light-shielding film and the second light-shielding film, decrease of light detecting sensitivity due to light leak of the second transistor is prevented. The liquid crystal device according to the second aspect of the invention can realize a liquid crystal device having high detecting sensitivity at the optical input without causing image disturbance when an image is displayed.

Further, in the liquid crystal device according to the first and second aspects of the invention, the second light-shielding film may be a wiring made of metal.

By employing the configuration above, an unnecessary light-shielding film is not necessarily formed. Further, the light-shielding film is formed extremely adjacent to the transistor (directly on or under the transistor), thereby ensuring an effect of light shielding with a small area.

Further, in the liquid crystal device according to the first and second aspects of the invention, the first transistor may include a gate electrode that is a transparent electrode.

By employing the configuration above, the gate electrode of the first transistor can prevent light to let the off current occur from being blocked, thereby more assuredly providing a larger off current.

Further, in the liquid crystal device according to the first and second aspects of the invention, the first transistor is an offset transistor having an intrinsic region formed between a channel region and a source and/or drain region of the semiconductor film.

By employing the configuration above, light enters to the intrinsic region without being blocked by the gate electrode. Therefore, the off current is more assuredly provided.

Further, in this case, the power source line may be the first scan line of the pixel in a row direction.

By employing the configuration above, the number of power source lines is reduced, further improving the aperture ratio of the pixel.

In the liquid crystal device according to the first aspect of the invention, the pixel may include a storage capacitor having one electrode coupled to the other of the source and the drain of the first transistor, and another electrode coupled to the first scan line of the pixel adjacent to each other in the row direction.

By employing the configuration above, a display contrast of the liquid crystal device can be improved.

In the liquid crystal device according to the second aspect of the invention, the pixel may include a storage capacitor having one electrode coupled to the other of the source and the drain of the third transistor, and another electrode coupled to the first scan line of the pixel adjacent to each other in a row direction.

By employing the configuration above, a display contrast of the liquid crystal device can be improved.

In the liquid crystal device according to the first and second aspects of the invention, the storage capacitor may include the pixel electrode, a storage capacitor electrode, and a storage capacitor dielectric film sandwiched between the pixel electrode and the storage capacitor electrode. The pixel electrode, the storage capacitor electrode, and the storage capacitor dielectric film may be transparent.

By employing the configuration above, suppressing reduction of the aperture ratio caused by the storage capacitor, and preventing light entering to the first transistor from being blocked by the storage capacitor.

Further, the liquid crystal device according to the first and second aspects of the invention may further include an input unit coupled to the controller. The controller may control the switching circuit so as to make the signal line and the signal line driver repeat a conductive state and a non-conductive state at predetermined time intervals if a predetermined operation command is input with the input unit, and may activate the photo sensor signal readout circuit in a case where the signal line and the signal line driver are in the non-conductive state.

Further, when the signal line and the signal line driver are made to be in the conductive state by the switching circuit, the first scan line is selected by the first scan driver, thereby providing an image signal to the signal line. Further, when the signal line and the signal line driver are made to be in the non-conductive state by the switching circuit, an off current is provided to the photo sensor signal readout circuit through the signal line.

Therefore, since the liquid crystal device according to the first and second aspects of the invention is provided with the switching circuit, detecting a position where light is irradiated and the illuminance of the light, that is control of detecting an off current, and image forming, that is control of operating the liquid crystal layer, can function together in a relatively simple configuration.

The liquid crystal device according to the first and second aspects of the invention may further include: a controller controlling the first scan driver, the second scan driver, the signal line driver, the photo sensor signal readout circuit, and the switching circuit; and a memory coupled with the controller, the controller storing readout data by the photo sensor signal readout circuit in the memory.

By employing the configuration above, the readout data stored in the memory can be used in a later process at the controller.

The liquid crystal device according to the first and second aspects of the invention, the controller may update image data stored in the memory and supply a control signal corresponding to the image data to the signal line driver based on the readout data.

By employing the configuration above, an image corresponding to a position where light is irradiated and the illuminance of the light can be displayed.

The liquid crystal device according to the first and second aspects of the invention may further include an input unit coupled to the controller. The controller may control the switching circuit so as to make the signal line and the signal line driver be in a non-conductive state, and activate the photo sensor signal readout circuit in a case where a predetermined operation command is input with the input unit.

By employing the configuration above, an image display mode and a light input mode are easily switched by operation of the input unit.

An electronic apparatus according to the invention may include the liquid crystal device according to the first and second aspects of the invention as a display.

According to the liquid crystal device, the configuration of the pixel is simplified, improving the aperture ratio of the pixel and quality of image. Therefore, according the electronic apparatus, an electronic apparatus provided with the display having a photoelectric conversion function is realized with a simple configuration.

Further, an electronic apparatus according to the invention may further include a lighting system for an optical input to the liquid crystal device.

By employing the configuration above, light is input to the liquid crystal device according to the first and second aspects of the invention by using the lighting system.

BRIEF DESCRIPTION OF THE DRAWINGS

The invention will be described with reference to the accompanying drawings, wherein like numbers reference like elements.

Fig. 1 is a block diagram illustrating a configuration of a first embodiment of a liquid crystal device according to a first aspect of the invention.

Fig. 2 is a circuit diagram illustrating a configuration of a pixel included in the liquid crystal device in the first embodiment according to the first aspect of the invention.

Fig. 3 is a partial sectional view schematically illustrating a sectional configuration of the pixel included in the liquid crystal device in the first embodiment according to the first aspect of the invention.

Fig. 4 is a partial plan view illustrating a wiring structure of the pixel included in the liquid crystal device in the first embodiment according to the first aspect of the invention.

Fig. 5 is a diagram explaining steps to form the wiring structure of the pixel included in the liquid crystal device in the first embodiment according to the first aspect of the invention.

Fig. 6 is a diagram explaining steps to form the wiring structure of the pixel included in the liquid crystal device in the first embodiment according to the first aspect of the invention.

Fig. 7 is a diagram explaining steps to form the wiring structure of the pixel included in the liquid crystal device in the first embodiment according to the first aspect of the invention.

Fig. 8 is a diagram explaining steps to form the wiring structure of the pixel included in the liquid crystal device in the first embodiment according to the first aspect of the invention.

Fig. 9 is a diagram explaining steps to form the wiring structure of the pixel included in the liquid crystal device in the first embodiment according to the first aspect of the invention.

Fig. 10 is a circuit diagram illustrating a configuration of a pixel included in a liquid crystal device in a second embodiment according to a second aspect of the invention.

Fig. 11 is a partial sectional view schematically illustrating a sectional configuration of the pixel included in the liquid crystal device in the second embodiment according to the second aspect of the invention.

Fig. 12 is a partial plan view illustrating a wiring structure of the pixel included in the liquid crystal device in the second embodiment according to the second aspect of the invention.

Fig. 13 is a diagram explaining steps to form the wiring structure of the pixel included in the liquid crystal device in the second embodiment according to the second aspect of the invention.

Fig. 14 is a diagram explaining steps to form the wiring structure of the pixel included in the liquid crystal device in the second embodiment according to the second aspect of the invention.

Fig. 15 is a diagram explaining steps to form the wiring structure of the pixel included in the liquid crystal device in the second embodiment according to the second aspect of the invention.

Fig. 16 is a diagram explaining steps to form the wiring structure of the pixel included in the liquid crystal device in the second embodiment according to the second aspect of the invention.

Fig. 17 is a diagram explaining steps to form the wiring structure of the pixel included in the liquid crystal device in the second embodiment according to the second aspect of the invention.

Fig. 18 is a perspective view illustrating an example of electronic apparatuses provided with a liquid crystal device as a display according to the first embodiment.

Fig. 19 is a schematic diagram explaining a configuration example of a pen-type lighting system.

Fig. 20 is a diagram explaining a distance from a tip of the pen-type lighting system to a focal point.

Fig. 21 is a partial sectional view schematically illustrating a sectional configuration of a modification of the liquid crystal device in the first embodiment.

Fig. 22 is a partial sectional view schematically illustrating a sectional configuration of a modification of the liquid crystal device in the second embodiment.

DESCRIPTION OF EXEMPLARY EMBODIMENTS

Now, one of embodiments of a liquid crystal and an electronic apparatus according to the invention will be described below with reference to the drawings. Note that the scale of each member in the drawings is adequately changed so as to be in a recognizable size.

[Liquid crystal display device]

[First embodiment]

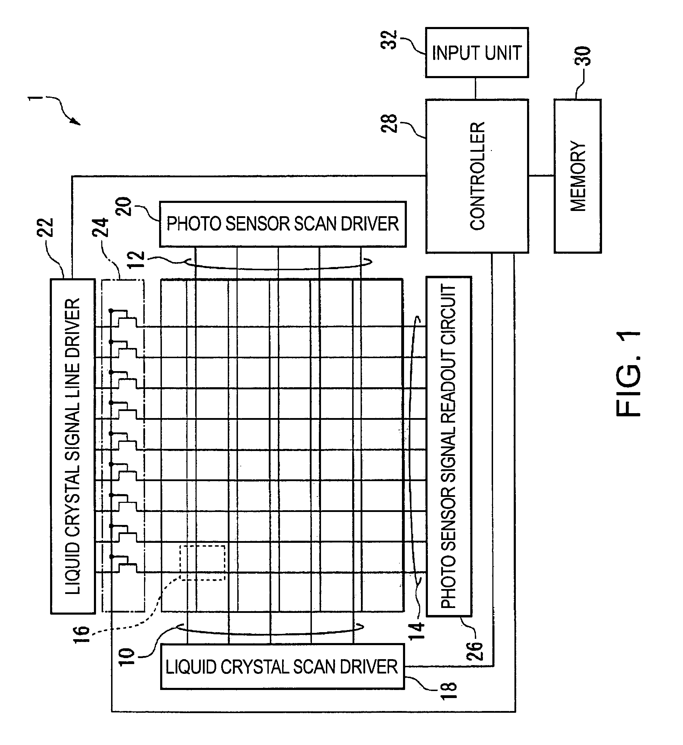

Fig. 1 is a block diagram illustrating a configuration of a liquid crystal device according to a first embodiment.

A liquid crystal device 1 shown in Fig. 1 is provided with liquid crystal scan lines 10 (first scan lines), photo sensor scan lines 12 (second scan lines), signal lines 14, pixels 16, a liquid crystal scan driver 18 (first scan driver), a photo sensor scan driver 20 (second scan driver), a liquid crystal signal line driver 22, switching circuits 24, a photo sensor signal readout circuit 26, a controller 28, a memory 30, and an input unit 32.

The liquid crystal scan lines 10 and the photo sensor scan lines 12 are equal in number and disposed in parallel with each other.

The signal lines 14 are disposed so as to intersect with each of the liquid crystal scan lines 10 and the photo sensor scan lines 12.

The pixels 16 are arranged in a matrix (matrix layout) with respect to each of intersections of the liquid crystal scan lines 10 and the photo sensor scan lines 12 with the signal lines 14.

The liquid crystal scan driver 18 (the first scan driver) is coupled with an end of each of the liquid crystal scan lines 10. The liquid crystal scan driver 18 selects the liquid crystal scan lines 10 by supplying a predetermined control signal (scanning signal).

The photo sensor scan driver 20 is coupled to an end of each of the photo sensor scan lines 12. The photo sensor scan driver 20 selects the photo sensor scan lines 12 by supplying a predetermined control signal.

The liquid crystal signal line driver 22 is coupled to an end of each of the signal lines 14, and provides an image signal to each of the signal lines 14.

The switching circuits 24 are located between the pixels 16 and the liquid crystal signal line driver 22. The switching circuits 24 switch between a conductive state and a non-conductive state of each of the signal lines 14 and the liquid crystal signal line driver 22 based on a control signal supplied from the controller 28. The switching circuits 24 are in the conductive state when being written by the liquid crystal signal line driver 22, and in the non-conductive state when being read by the photo sensor signal readout circuit 26.

The photo sensor signal readout circuit 26 is coupled to the other end of each of the signal lines 14. The photo sensor signal readout circuit 26 selects one of the signal lines 14 and reads an electric current of the signal line that is selected as a photo sensor signal. Further, the photo sensor signal readout circuit 26 includes a signal line selection circuit such as a shift register and a decoder and a current measurement circuit such as an amplifier circuit and a comparison circuit, for example, and amplifies an imperceptible signal appeared on the signal line.

The controller 28 supplies a control signal to each of the liquid crystal scan driver 18, the photo sensor scan driver 20, the liquid crystal signal line driver 22, the switching circuits 24, and the photo sensor signal readout circuit 26. The controller 28 is coupled to the memory 30. The controller 28 in the first embodiment obtains data read out by the photo sensor signal readout circuit 26 (hereinafter, referred to as "readout data") and stores it in the memory 30. Further, the controller 28 updates image data preliminarily stored in the memory 30 and supplies a control signal corresponding to the image data to the liquid crystal signal line driver 22 based on the readout data. This will be described in detail later.

The memory 30 is formed by a semiconductor memory such as DRAM and SRAM, and serves as a video memory storing image data and other functions such as storing various data produced or used by the controller 28.

The input portion 32 is coupled to the controller 28, and serves as a function to send various orders for input by a user to the controller 28. The input unit 32 represents a direction indicator key (an arrow key or the like) or a push button, or the like.

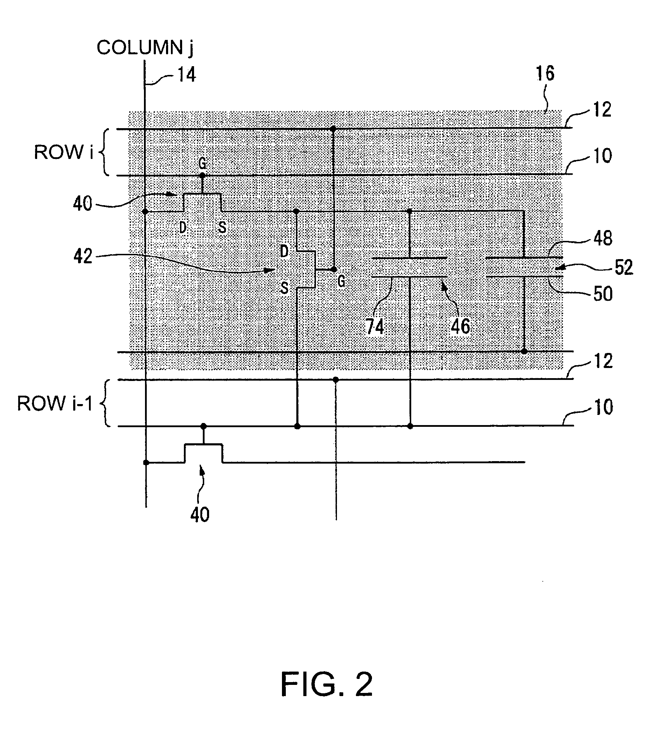

Fig. 2 is a circuit diagram illustrating a detailed configuration of a pixel. In Fig.2, one of the pixels 16 located in a row i and a column j (Both i and j indicate natural numbers.) is shown. However, other pixels 16 have the same configuration. As shown in the figure, the pixel 16 is formed at an intersection of the liquid crystal scan line 10 on the row i and the photo sensor scan line 12 on the row i with the signal line 14 on the column j, and includes a liquid crystal switching transistor 40 (first transistor), a photo sensor switching transistor 42 (second transistor), a pixel electrode 48, a common electrode 50, a liquid crystal layer 52, and a storage capacitor 46.

In the liquid crystal switching transistor 40, a gate (G) is coupled to the liquid crystal scan line 10 on the row i, and one of a source/drain, e.g. a drain (D), is coupled to the signal line 14 on the column j. The liquid crystal switching transistor 40 is preferably in an offset configuration.

In the photo sensor switching transistor 42, a gate (G) is coupled to the photo sensor scan line 12 on the row i, and one of a source/drain, e.g. a drain (D), is coupled to the other of the source/drain, e.g. a source (S), of the liquid crystal switching transistor 40. Further, the other of the source/drain, e.g. a source (S), of the photo sensor switching transistor 42 is coupled to a power source line.

As the power source line coupled with the other of source/drain, e.g. the source (S), of the photo sensor switching transistor 42, a wiring to be formed separately, or the liquid crystal scan line 10 on a row i-1 of a preceding stage, can be used, for example. Similarly to the liquid crystal device 1 in the first embodiment, the liquid crystal scan line 10 on the row i-1 is preferably used as a power source line. As above, by using the liquid crystal scan line 10 on the row i-1, an aperture ratio of a pixel can be enhanced.

The pixel electrode 48 is coupled to the other of the source/drain, e.g. the source (S), of the liquid crystal switching transistor 40. The common electrode 50 is arranged so as to face to the pixel electrode 48. The liquid crystal layer 52 is arranged between the pixel electrode 48 and the common electrode 50.

The storage capacitor 46 is coupled to between the other of the source/drain, e.g. the source (S), of the liquid crystal switching transistor 40 and the liquid crystal scan line 10 on the row i-1. One electrode of the storage capacitor 46 is coupled to the liquid crystal scan line 10 on the row i-1 of the preceding stage, providing effects to reduce the number of wiring and improve the aperture ratio. In this case, the liquid crystal scan line 10 in the preceding stage is used as a reference potential. Alternatively, another wiring can be formed to be coupled with the one electrode of the storage capacitor 46. The storage capacitor 46 being formed can enhance a contrast of display.

The storage capacitor 46 is preferably coupled with the preceding stage (used as a reference potential.), and further, preferably formed by a transparent conductive film-transparent conductive film.

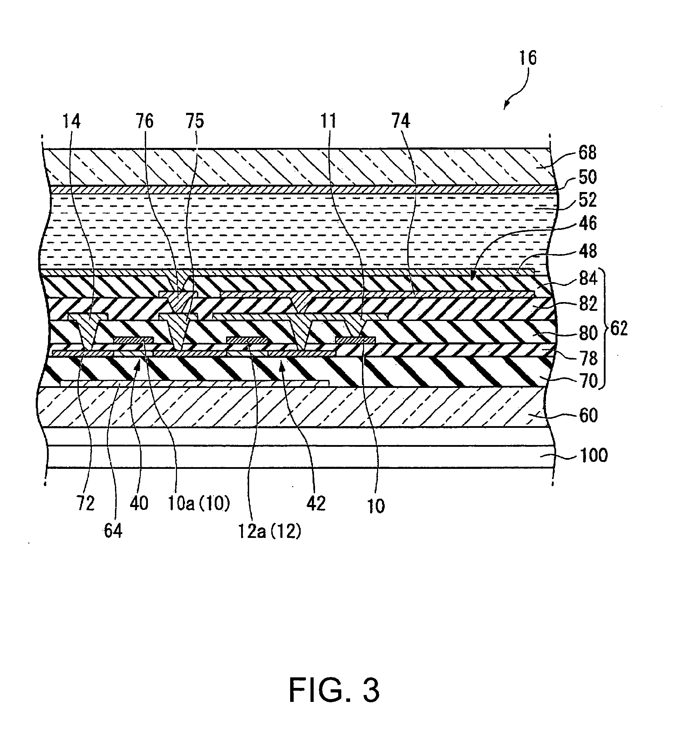

Fig. 3 is a partial sectional view schematically showing a sectional configuration of the pixel of the liquid crystal device. As shown in Fig. 3, the liquid crystal device 1 is provided with a first substrate 60 that is transparent, a circuit layer 62 disposed on the first substrate 60 by contacting with the pixel electrode 48, a first light-shielding film 64 arranged on a predetermined position between the first substrate 60 and the circuit layer 62, a second substrate 68 that is transparent, placed facing to the first substrate 60, and having the common electrode 50 formed thereon, the liquid crystal layer 52 arranged between the first substrate 60 and the second substrate 68, and a backlight 100 disposed on the first substrate 60 side.

The liquid crystal device 1 according to the first embodiment modulates incident light from the backlight 100 at the liquid crystal layer 52, and has a configuration in which a displayed image is viewed from the second substrate 68 side. Therefore, the first substrate 60 and the second substrate 68 are transparent to visible light.

The first substrate 60 is a substrate being transparent to visible light made of a glass substrate or a plastic substrate, for example.

The circuit layer 62 includes the liquid crystal scan line 10, the photo sensor scan line 12, the signal line 14, the liquid crystal switching transistor 40, the photo sensor switching transistor 42, and the storage capacitor 46. As shown in the figure, both of the liquid crystal switching transistor 40 and the photo sensor switching transistor 42 are formed of thin film transistors.

The first light-shielding film 64 is formed under the liquid crystal switching transistor 40 and the photo sensor switching transistor 42, and positioned between the first substrate 60 and the circuit layer 62 so as to overlap with the liquid crystal switching transistor 40 and the photo sensor switching transistor 42 in a height direction (a direction in which the first substrate 60, the circuit layer 62, the liquid crystal layer 52, the second substrate 68 and others are laminated). The light-shielding film 64 is preferably a metal film made of aluminum, chromium or the like. Accordingly, a semiconductor film portion of the liquid crystal switching transistor 40 and a semiconductor film portion of the photo sensor switching transistor 42 to be described later are shielded so that the light from the backlight 100 does not enter.

The first light-shielding film 64 is preferably formed on a position to overlap with at least an active region of the semiconductor film portion of the liquid crystal switching transistor 40 and the semiconductor film portion of the photo sensor switching transistor 42. The "active region" here indicates an intrinsic region between a channel forming region and a drain region, and an intrinsic region between the channel forming region and a source region. The first light-shielding film 64 as above can prevent occurrence of an off state current from the liquid crystal switching transistor 40 and the photo sensor switching transistor 42 caused by light from the backlight 100.

Next, the configuration of the circuit layer 62 will be described in detail.

An insulating film 70 serving as an underlying protective film is formed on the first substrate 60 so as to cover the first light-shielding film 64. On an upper surface of the insulating film 70 serving as an underlying protective film, a semiconductor film 72 in an island-like shape is formed.

The semiconductor film 72 is made of high-temperature polysilicon or low temperature polysilicon, and shared between the liquid crystal switching transistor 40 and the photo sensor switching transistor 42 as shown in the figure.

The gate insulating film 78 is formed on the insulating film 70 so as to cover the semiconductor film 72. Alternatively, the semiconductor film can be thermally oxidized to be used. The insulating film 78 serves as a gate insulating film of each transistor. On a predetermined position above the semiconductor film 72 and on the insulating film 78 to be the underlying protective film, the liquid crystal scan line 10 and the photo sensor scan line 12 are formed.

An insulating film 80 serving as a first interlayer insulating film is formed on the insulating film 78 so as to cover the liquid crystal scan line 10 and the photo sensor scan line 12.

The signal line 14 is formed on the insulating film 80, and coupled to the semiconductor film 72 through a contact hole arbitrarily formed in the insulating film 80. Similarly, a wiring 11 (made of a same kind of metal as that of the signal line formed on the same layer) is formed on the insulating film 80, and coupled to the semiconductor film 72 through a contact hole arbitrarily formed in the insulating film 80. The signal line 14 and the wiring 11 are made of metal such as Al, thereby blocking light. Further, a part of the wiring 11 is preferably formed to cover the active region of the semiconductor film serving as a photo sensor switching transistor in a height direction.

An insulating film 82 serving as a second interlayer insulating film is formed on the insulating film 80 so as to cover the wiring 11, the signal line 14, and other wiring 75. On a predetermined position on the insulating film 82, more specifically on a position not to overlap with the liquid crystal switching transistor in the height direction, one electrode 74 of the storage capacitor 46 is formed.

The one electrode 74 is coupled to the wiring 11 through a contact hole arbitrarily formed in the insulating film 82.

The insulating film 84 is formed on the insulating film 82 to cover the one electrode 74 and the wiring 76. In the first embodiment, since it is assumed that light from the backlight 100 is modulated and viewed from the second substrate 68 side, a transparent material is adequately employed to form each of the insulating films 70, 78, 80, 82, and 84 stated above. A specific example thereof is a silicon oxide film.

The pixel electrode 48 is coupled to the wiring 76 through a contact hole formed on a predetermined position in the insulating film 84. The wiring 76 is coupled to the wiring 75 through a contact hole formed in the insulating film 82. Accordingly, the pixel electrode 48 is electrically coupled with the semiconductor film 72 through the wirings 75 and 76.

Further, the storage capacitor 46 is formed with the pixel electrode 48, the one electrode 74 stated above, and the insulating film 84 interfering between them. The pixel electrode 48 and the one electrode 74 are made by using a transparent conductive film such as indium tin oxide (ITO). This is because, the liquid crystal device 1 according to the first embodiment has a configuration to modulate light from the back light 100 and images are viewed from the second substrate 68 side. That is, the storage capacitor 46 is coupled with the preceding stage (used as a reference potential), and further, formed by a transparent conductive film- transparent conductive film on the insulating film 84.

By opposing to the first substrate 60 having the pixel electrode 48 formed as above, the second substrate 68 having the common electrode 50 is arranged. As the common electrode 50, a transparent conductive film such as ITO is used. Between the pixel electrode 48 and the common electrode 50, the liquid crystal layer 52 is formed. The liquid crystal layer 52 includes a liquid crystal material, an alignment film to define an alignment direction of liquid crystal molecules included in the liquid crystal material.

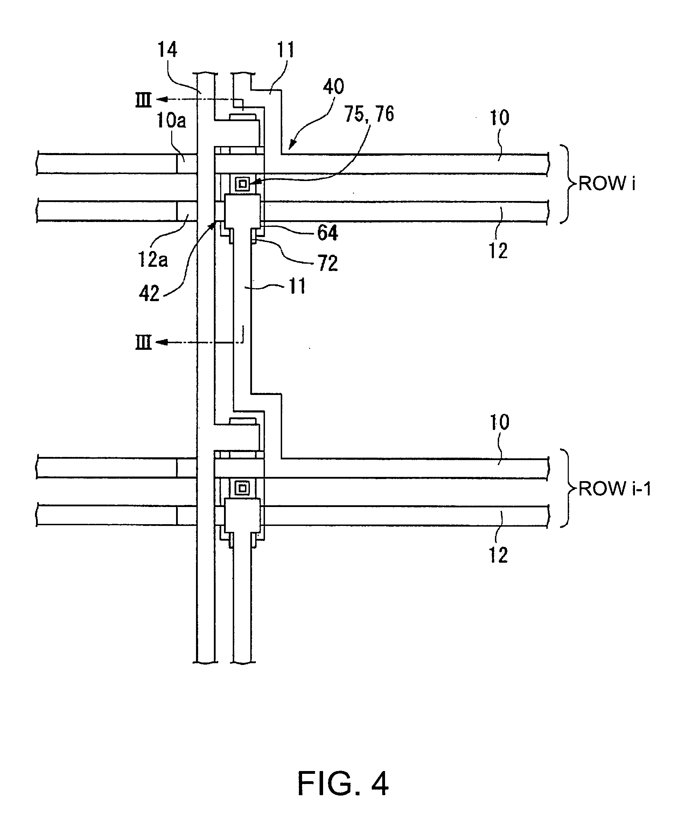

Next, a wiring structure of the pixel 16 will be explained referring to Fig. 4. Fig. 4 is a partial plan view showing the wiring structure of the pixel 16. The sectional view shown in Fig. 3 nearly corresponds to a III-III line direction shown in Fig. 4. In order to facilitate understanding, the transparent conductive film and the pixel electrode are omitted.

As shown in the figure, the first light-shielding film 64 located in an under layer side of the semiconductor film 72 is arranged in a position to overlap with the active region of the semiconductor film portion of the liquid crystal switching transistor 40 and the active region of the semiconductor film portion of the photo sensor switching transistor 42.

The semiconductor film 72 is shared by the liquid crystal switching transistor 40 and the photo sensor switching transistor 42. On a layer side further above the semiconductor film 72, the liquid crystal scan line 10 and the photo sensor scan line 12 are formed.

A portion of the liquid crystal scan line 10 being intersected with the semiconductor film 72, that is a portion 10a serving as a gate electrode of the liquid crystal switching transistor 40, and a portion 12a of the photo sensor scan line 12 being intersected with the semiconductor film 72, that is a portion serving as a gate electrode of the photo sensor switching transistor 42, are preferably formed with a transparent conductive member such as ITO.

On a layer side furthermore above the liquid crystal scan line 10 and the photo sensor scan line 12, the signal line 14 made of metal such as Al and other wiring 11 are formed. The wiring 11 is coupled to the semiconductor film 72 (a portion corresponding to the photo sensor switching transistor 42) through a contact hole and coupled with the liquid crystal scan line 10 on the row i-1 as illustrated. Further, as shown in Fig. 4, a part of the wiring 11 is preferably formed to cover the active region of the semiconductor film serving as a photo sensor switching transistor.

Further, in a center of the semiconductor film 72 (a boundary portion of a portion corresponding to the liquid crystal switching transistor 40 and the portion corresponding to the photo sensor switching transistor 42), contact holes 75 and 76 are formed. Through the contact holes 75 and 76, the semiconductor film 72 and the pixel electrode 48 are electrically coupled.

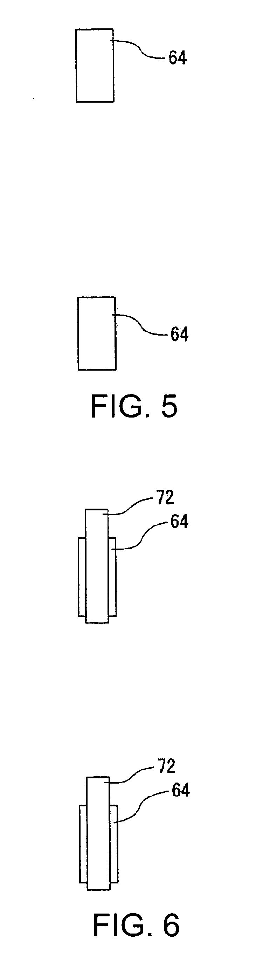

The forming steps of the wiring and so on is shown in Figs. 5 through 9. The forming steps will be described in brief according to the figures. The descriptions on the insulating films between the wirings are omitted.

First, the first light-shielding film 64 is formed in a predetermined position on the first substrate 60 (Fig. 5).

Next, the semiconductor film 72 is formed in a position in which a part of the semiconductor film 72 is overlapped with the first light-shielding film 64 (Fig. 6). The semiconductor film 72 may be obtained from a high temperature polysilicon film or a low temperature polysilicon film formed and patterned to be an island-like shape, for example.

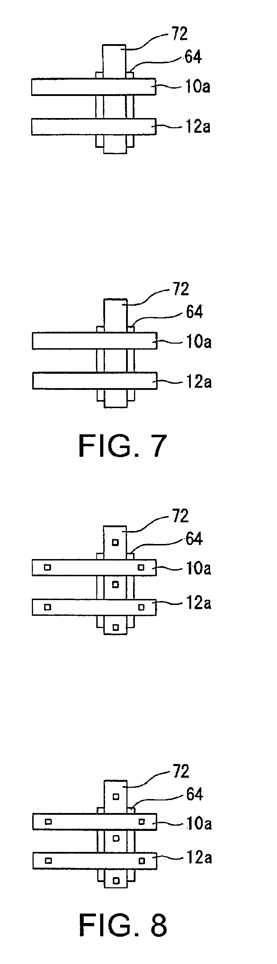

Next, on un upper layer of the semiconductor film 72, the portion 10a serving as a gate electrode of the liquid crystal switching transistor 40 and the portion 12a serving as a gate electrode of the photo sensor scan line 12 are formed (Fig. 7). These portions are obtained from a transparent conductive film such as ITO formed and patterned later. By using the transparent conductive film as a gate electrode, the active layer is lit when the liquid crystal switching transistor is used as a photo sensor, providing an effect improving a sensitivity of the photo sensor. When the liquid crystal switching transistor is used as a photo sensor, a light leak current in an off state of the transistor is measured. The light leak current occurs at a border between a channel forming region and a drain region (referred to as a drain end). Even when the gate electrode is a metal film blocking light, the light leak current occurs since light is diffracted at an end of the gate electrode and lights the drain end. However, efficiency thereof is increased by using a transparent electrode.

Next, the contact hole is formed in a predetermined position of an insulating film that is not shown (Fig. 8).

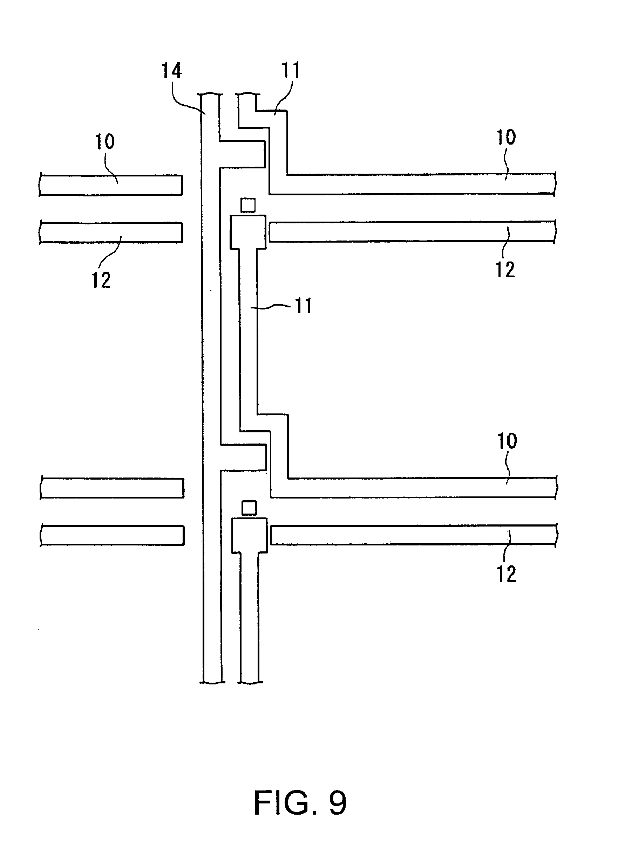

Then, the liquid crystal scan line 10, the photo sensor scan line 12, the signal line 14, and the wiring 11 are formed (Fig. 9). At this time, the light-shielding conductive film covers an upper portion of the photo sensor switching transistor, and protect the active layer and the drain end of the photo sensor switching transistor from being exposed to light. As the light-shielding conductive film, a common metal film obtained by forming a conductive film made of aluminum, copper, chromium, tantalum, silver, gold, iron, nickel or their alloy appropriately including them, for example, and then patterning them.

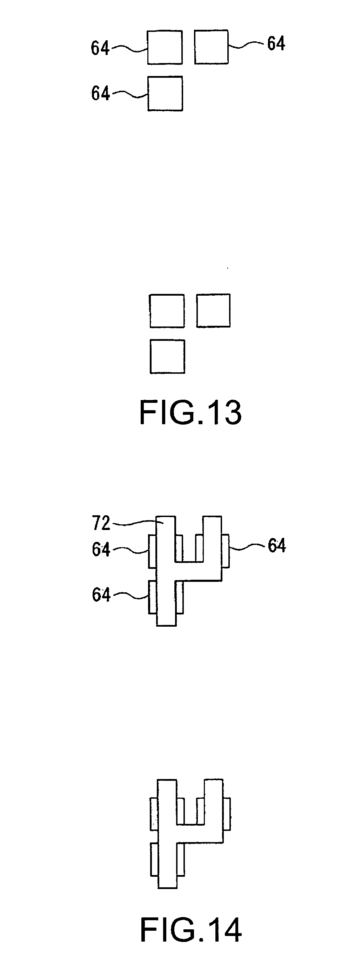

Through the above steps, the wiring structure of the pixel 16 shown in Fig. 14 is formed.

The liquid crystal device 1 according to the first embodiment has the configuration described above. Now, operation thereof will be explained in detail with mainly reference to Figs. 1 and 2.

The operation of the liquid crystal device 1 according to the first embodiment is controlled by the controller 28. For example, when a command from the display mode is input through the input unit 32, the controller 28 sends a control signal to the switching circuit 24 so as to make each of the signals 14 and the liquid crystal signal line driver 22 be in a conductive state. On the other hand, when a command for an image pickup mode is input using the input unit 32, the controller 28 sends a control signal to the switching circuit 24, and makes each of the signal lines 14 and the liquid crystal signal line driver 22 be in a non-conductive state, while sending a control signal to the photo sensor signal readout circuit 26 to activate it (so as to be in an active state). Accordingly, the controller 28 switches between the display mode and the image pickup mode (to be described in detail later).

Now, the display mode, the image pickup mode, and an overwriting mode concurrently using the display mode, the image pickup mode will be explained.

[1] Display mode

Based on a control by the controller 28, the liquid crystal scan driver 18 provides a scanning signal with the highest electric potential (e.g. 8V) by selecting the liquid crystal scan lines 10, while it provides a scanning signal with the lowest electric potential (e.g. 0V) by not selecting the liquid crystal scan lines 10 to the liquid crystal scan lines 10. At this time, based on a control by the controller 28, the photo sensor scan driver 20 provides a photo sensor scanning signal with the lowest electric potential (e.g. 0V) to all of the photo sensor scan lines 12. Therefore, all of the photo sensor switching transistor 42 become in an off state.

Further, based on a control of the controller 28, the liquid crystal signal line driver 22 provides a predetermined display signal to the signal lines.

In the display mode as above, based on a control of the controller 28, the switching circuit 24 makes between the liquid crystal signal line driver 22 and each of the signal lines 14 in a conductive state. In this state, the liquid crystal scan driver 18 selects the liquid crystal scan lines 10. Further, the liquid crystal signal line driver 22 selects the signal lines 14, and outputs a desired display signal to the signal line 14 that has been selected.

As a result, the display signal is provided to the pixel 16 located where the liquid crystal scan line 10 selected and the signal line 14 selected are intersected. Then, the liquid crystal layer 52 of each of the pixels are operated based on the display signal, thereby modulating light from the back light 100. According to this, users can visually recognize the image from the second substrate 68 side.

[2] Image pickup mode

When an operation command for "image pickup mode switching" is made by a user using the input unit 32, the details are input from the input unit 32 to the controller 28. At this time, the controller 28 switches the display mode to the image pickup mode.

In this image pickup mode, based on a control by the controller 28, the liquid crystal scan driver 18 provides a scanning signal with the lowest electric potential (e.g. 0V) to all of the liquid crystal scan lines 10. Therefore, all of the liquid crystal switching transistors 40 become in an off state. At this time, based on a control by the controller 28, the photo sensor scan driver 20 provides a scanning signal with the highest electric potential (e.g. 8V) by selecting the photo sensor scanning signal 12, while it provides a scanning signal with the lowest electric potential (e.g. 0V) by not selecting the photo sensor scanning signal 12 to the photo sensor scanning signal 12.

Further, concurrently to the above, the controller 28 provides a predetermined control signal, thereby cutting off connection between the liquid crystal signal line driver 22 and the signal lines 14 by the switching circuit 24 on a steady basis, while operating the photo sensor signal readout circuit 26.

In the image pickup mode as above, based on a control of the controller 28, the switching circuit 24 makes between the liquid crystal signal line driver 22 and each of the signal lines 14 in an insulated state. In this state, the photo sensor scan driver 20 selects the photo sensor scan lines 12 of a predetermined one of the pixels 16. Subsequently, the photo sensor signal readout circuit 26 selects the signal lines 14 of a predetermined one of the pixels 16, thereby reading a photo sensor signal from the signal lines 14. The photo sensor readout circuit 26 includes a signal line selection circuit such as a shift register and a decoder and a current measurement circuit such as an amplifier circuit and a comparison circuit, for example. Then, the photo sensor signal of the signal line 14 selected is measured by the current measurement circuit (that is, amplified or converted from analog to digital), outputting a result to an arithmetic device or the like that is externally equipped.

In the image pickup mode, the backlight 100 is preferably turned off. By turning the backlight off, sensitivity of light sensor is improved. Further, in the overwriting mode to be described later, an intermittent display can smoothly display moving images, and further, does not have to recognize image disturbance during picking up images.

Then, for example, a user can write on a surface of the second substrate 68 (Fig. 3) by using a lighting system such as a pen type lighting system so as to perform image pickup (e.g. lettering). The pen type lighting system has a same shape as that of a common pen, and a configuration in which an end thereof can emit strong light. An example of the configuration will be described later. Further, the lighting system to be employed for image pickup is not limited to this. Any lighting devices that are small and emit strong light can be applicable.

When information input by writing with the pen type lighting system is detected as above, the liquid crystal scan driver 18 can provide a scanning signal with the lowest electric potential (e.g. 0V) to all of the liquid crystal scan lines 10, making the liquid crystal switching transistor 40 being in the off state. Then, the photo sensor scan driver 20 sequentially provides a photo sensor scanning signal with the highest electric potential (e.g. 8V) to each of the photo sensor scan lines 12. That is, the photo sensor scan lines 12 are sequentially selected. Accordingly, the photo sensor switching transistor 42 coupled to the photo sensor scan line 12 that is selected is in an on state. While a specific one of the photo sensor scan lines 12 is selected, the signal line 14 on a row j is made to be at the highest electric potential (e.g. 8V) so that the liquid crystal switching transistor 40 has potential difference.

In this state, when the semiconductor film 72 of the liquid crystal switching transistor 40 at a position corresponding to a point written by the pen type lighting system is exposed to light through the second substrate 68, light leak occurs on the liquid crystal switching transistor 40 being exposed, resulting in an off current whose size varies depending on illuminance. The off current is sequentially read by the photo sensor signal readout circuit 26. Data read by the photo sensor signal readout circuit 26 is input to the controller 28, and then stored in the memory 30. Based on the data being read, the controller 28 can define a position written by the user with the pen type lighting system (that is a position of an tip of the pen) on the surface of second substrate 68. Further, since the wiring 11 is formed to extend so as to overlap with a predetermined portion of the semiconductor film serving as the photo sensor switching transistor 42, light from the lighting system (light through the second substrate 68) does not irradiate to a portion of the semiconductor film of the photo sensor switching transistor 42, thereby preventing the off current from occurring.

The controller 28 can reflect a result of the pickup showing the position of the tip of the pen by detection to a later process. For example, while a predetermined image is displayed, overwriting to process the displayed image can be performed based on a position of the tip of the pen. Further, when the liquid crystal device 1 is installed into various electronic apparatuses, the controller 28 can pass over the position obtained by detection to a superordinate controller that is not shown. According to this, a user command can be reflected to a later process by the superordinate controller.

[3] Overwriting mode

Next, a case of overwriting to process a predetermined image being displayed based on a position of the tip of the pen will be briefly explained.

When an operation command for "overwriting mode switching" is made by a user using the input unit 32, the command is input from the input unit 32 to the controller 28. At this time, the controller 28 switches the display mode or the image pickup mode to the overwriting mode.

In the overwriting mode, the display mode and the image pickup mode, which are described above, are switched alternately at predetermined intervals. The predetermined interval is, for example, a half of a frame interval that is time to retain a predetermined one piece of a display image.

More specifically, the display mode and the image pickup mode are repeated in a high speed to form one image (one frame). For example, when frame frequency is represented as $f_R$Hz, a frame period is $1/f_R$ second.

Therefore, each of the display mode and the image pickup mode can be set once during the period. If the period of both the display mode and the image pickup mode is $1/(2f_R)$ second, control of a clock signal or the like is facilitated.

In the case as above, the display mode and the image pickup mode are alternately switched in a frame based on the control of the controller 28. In the image pickup mode, the image displayed in the display mode may be distorted due to occurrence of light leak. Since this may annoy users, back light is preferably turned off so as to be a dark display. Therefore, the dark display (the image pickup mode) interposes between a display image and next display image in a short period. This can eliminate image remaining when moving images are displayed on a liquid crystal display whose response is rather slow, e.g. a few millisecond. As a result, blur of outline and tail-leaving phenomenon are prevented from occurring. In addition, if the back light is turned off, sensitivity to input with the lighting pen is improved.

In the overwriting mode as above, when image pickup is performed by a user so as to write on the surface of the second substrate 68 (refer to Fig. 3) of the liquid crystal device 1 with the pen type lighting system (e.g. tracing outline of the image), the controller 28 acquires readout data from the photo sensor signal readout circuit 26 in the image pickup mode allocated during a first half of one frame, and then, specifies a position of the tip of the pen on the display based on the readout data stored in the memory 30.

Further, the controller 28 overwrites image data of the pixel corresponding to the position specified based on the readout data onto the image data currently displayed and stored in the memory 30 in a second half of the frame.

Accordingly, an image corresponding to a position that is newly written by the pen type lighting system is displayed.

The liquid crystal display 1 according to the first embodiment as above can be used as a liquid crystal display device and also as a photoelectric conversion device (image pickup device). Further, information can be directly input to the display surface of the liquid crystal device.

According to the liquid crystal display 1 in the first embodiment described as above, the following advantageous effects are provided.

The liquid crystal display 1 includes: the photo sensor scan lines 12 disposed parallel to the liquid crystal scan lines 10; a photo sensor switching transistor 42, which is a part of the pixel 16, having a gate coupled to the photo sensor scan line 12; and the first light-shielding film 64 covering the back light 100 side of the liquid crystal switching transistor 40 and the photo sensor switching transistor 42. One of a source/drain, e.g. a drain (D), of the photo sensor switching transistor 42 is coupled to a source/drain, e.g. a source (S), of the liquid crystal switching transistor 40 while the other of the of the source/drain, e.g. a source (S), of the photo sensor switching transistor 42 is coupled to the liquid crystal scan lines 10 serving as a power source line.

In the liquid crystal device 1 as above, an off current occurs because the liquid crystal switching transistor 40 is exposed to light. Then, the liquid crystal switching transistor 40 is made to be in an off state while the photo sensor switching transistor 42 is scanned so as to be in an on state sequentially. In this state, by detecting the off current through the signal lines 14, a position of the liquid crystal switching transistor 40 whose off current is large, and the size of the off current are detectable, providing a signal based on them.

That is, the liquid crystal device 1 according to the first embodiment, the pixel 16 having only two transistors disposed is aligned in row and column directions, providing a liquid crystal device having a photoelectric conversion function.

Therefore, according to the liquid crystal device 1, a configuration of each pixel in a liquid crystal device having a photoelectric conversion function is simplified. Further, the configuration of the pixel 16 is simplified, improving the aperture ratio of the pixel and quality of image.

The liquid crystal device 1 does not have a light-shielding object on an upper portion of the liquid crystal switching transistor 40.

Therefore, an off current is surely obtained without shielding light to the liquid crystal switching transistor 40.

In the liquid crystal device 1, the photo sensor switching transistor 42 is covered with the wiring 11 (same metal forming the signal line).

Therefore, an off current is prevented from occurring at the photo sensor switching transistor 42.

In the liquid crystal device 1, the portion 10a intersecting with the semiconductor film 72 among gate electrodes of the liquid crystal switching transistor 40, that is the liquid crystal scan lines 10, is transparent.

Therefore, according to the liquid crystal device 1, the gate electrode of the liquid crystal switching transistor 40 can prevent light to let the off current occur from being blocked, thereby more assuredly providing a larger off current.

The liquid crystal device 1 has a configuration in which the liquid crystal switching transistor 40 is an offset transistor.

Therefore, according to the liquid crystal device 1, light enters to an intrinsic region of the semiconductor film 72 without being blocked by the gate electrode (the liquid crystal scan lines 10), more assuredly providing the off current.

In the liquid crystal device 1, the liquid crystal scan lines 10 of the pixels 16 in a row direction are used as a power source coupled to the photo sensor switching transistor 42.

Therefore, a separate power source in order to couple with the photo sensor switching transistor 42 is not required, thereby reducing the number of power source lines. Accordingly, the aperture ratio of the pixel 16 can be improved.

In the liquid crystal device 1, each of the pixels 16 is provided with the storage capacitor 46. Therefore, a display contrast of the liquid crystal device 1 can be improved.

Further, the storage capacitor 46 includes the pixel electrode 48, the insulating film 84 (storage capacitor dielectric film), and the one electrode 74 (storage capacitor electrode) that are transparent.

Therefore, light is not blocked by the storage capacitor 46, suppressing reduction of the aperture ratio caused by the storage capacitor 46, and preventing light entering to the liquid crystal switching transistor 40 from being blocked by the storage capacitor 46.

The liquid crystal device 1 includes: the liquid crystal scan driver 18 coupled to an end of the liquid crystal scan lines 10; the liquid crystal signal line driver 22 coupled to an end of the signal lines 14; the photo sensor scan driver 20 coupled to an end of the photo sensor scan lines 12; the switch circuit 24 disposed between the signal lines 14 and the liquid crystal signal line driver 22, and switching between a conductive state and a non-conductive state of the signal lines 14 and the liquid crystal signal line driver 22; and the photo sensor signal line readout circuit 26 coupled to the other end of the signal lines 14.

Further, when the signal lines 14 and the liquid crystal signal line driver 22 are made to be in a conductive state by the switching circuit 24, the liquid crystal scan lines 10 are selected by the liquid crystal scan driver 18, thereby providing an image signal to the signal lines 14. Further, when the signal lines 14 and the liquid crystal signal line driver 22 are made to be in a non-conductive state by the switching circuit 24, the off current is provided to the photo sensor signal readout circuit 26 through the signal lines 14.

As above, since the liquid crystal device 1 is provide with the switching circuit 24, detecting a position where light is irradiated and the illuminance of the light, that is a control to detect an off current, and image forming, that is a control of the liquid crystal layer 52 can function together with a relatively simple configuration.

The liquid crystal device 1 includes the liquid crystal scan driver 18, the photo sensor scan driver 20, the liquid crystal signal line driver 22, the controller 28 controlling the photo sensor signal readout circuit 26 and the switching circuit 24, and the memory 30 coupled to the controller 28. Then, the controller 28 stores data read by the photo sensor signal readout circuit 26 in the memory 30.

Therefore, according to the liquid crystal device 1, the readout data stored in the memory 30 can be used in a later process at the controller.

In the liquid crystal device 1, the controller 28 updates image data preliminarily stored in the memory unit 30, and supplies a control signal corresponding to the image data to the liquid crystal signal line driver 22 based on the readout data.

Accordingly, the liquid crystal device 1 can display an image corresponding to the readout data obtained by the photo sensor signal readout circuit 26.

The liquid crystal device 1 further includes the input unit 32 coupled to the controller 28. When a predetermined operation command is input with the input unit 32, the controller 28 controls the switching circuit 24 so as to make the signal lines 14 and the liquid crystal signal line driver 22 be in a non-conductive state, activating the photo sensor signal readout circuit 26.

Accordingly, the liquid crystal device 1 makes it easy to switch between an image display mode and a light input mode by operating the input unit 32.

[Second Embodiment]

Next, a second embodiment of the liquid crystal device will be described. In the description of the second embodiment, the description of the same parts as those in the first embodiment will be omitted or simplified.

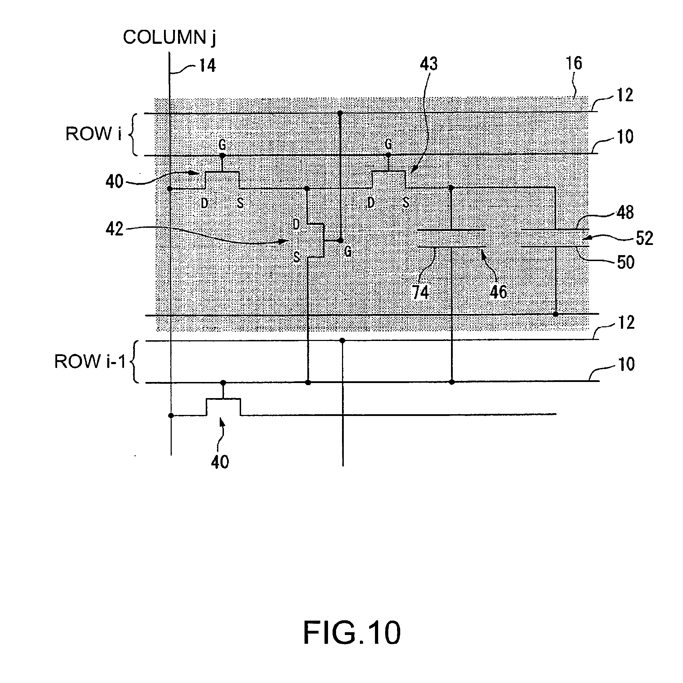

Fig. 10 is a circuit diagram illustrating a detailed configuration of a pixel included in the liquid crystal device in the second embodiment. As shown in the figure, the pixel 16 included in the liquid crystal device of the second embodiment is provided with a second liquid crystal switching transistor 43 (a third transistor) coupled in series to the liquid crystal switching transistor 40 (the first transistor). In the second liquid crystal switching transistor 43, a gate (G) is coupled to the liquid crystal scan line 10 on the row i, and one of a source/drain, e.g. a drain (D), is coupled to the other of the source/drain, e.g. a drain (D), of the liquid crystal switching transistor 40. Further, the other of the source/drain, e.g. a source (S) of the second liquid crystal switching transistor 43 is coupled to the pixel electrode 48.

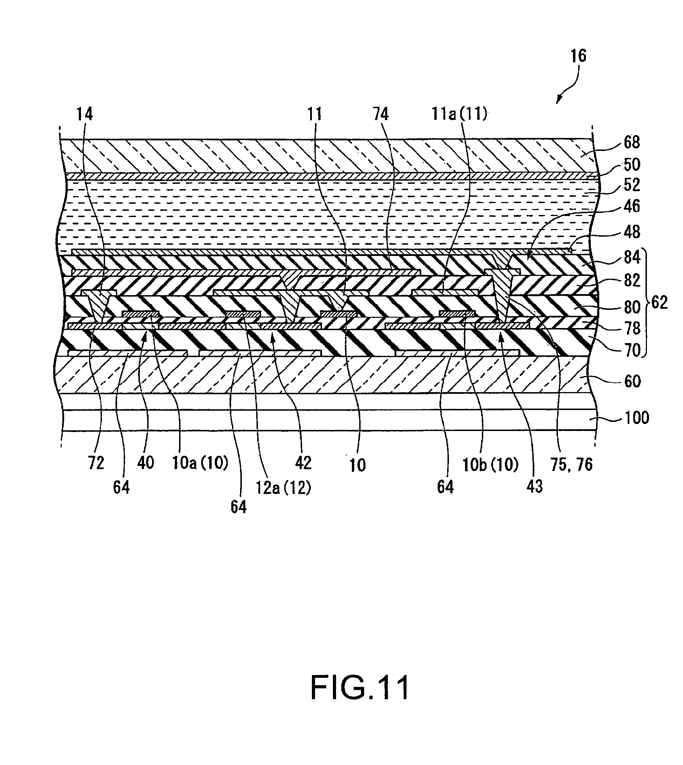

Fig. 11 is a partial sectional view schematically showing a sectional configuration of the pixel of the liquid crystal device according the second embodiment. In the Fig. 11, the liquid crystal switching transistor 40 and the second liquid crystal switching transistor 43 are apart from each other for convenience of drawing. However, in reality, the other of the source/drain, e.g. a source (S), of the liquid crystal switching transistor 40 and the one of the source/drain, e.g. a drain (D), of the second liquid crystal switching transistor 43 as shown in Fig. 10.

As shown in Fig. 11, in the second embodiment, the first light-shielding film 64 is formed under the liquid crystal switching transistor 40 and the photo sensor switching transistor 42, and under the second liquid crystal switching transistor 43. Accordingly, the semiconductor film portion of the liquid crystal switching transistor 40, the semiconductor film portion of the photo sensor switching transistor 42, and a semiconductor film portion of the second liquid crystal switching transistor 43 are shielded so that the light from the backlight 100 does not enter thereto.

Similarly to the first embodiment described above, the first light-shielding film 64 is preferably formed on a position to overlap with at least an active region of the semiconductor film portion of the liquid crystal switching transistor 40, the semiconductor film portion of the photo sensor switching transistor 42, and the second liquid crystal switching transistor 43. This can avoid an off current occurring from the liquid crystal switching transistor 40, the photo sensor switching transistor 42, and the second liquid crystal switching transistor 43 caused by the light from the backlight 100.

In the circuit layer 62, the semiconductor film 72 is shared among the liquid crystal switching transistor 40, the photo sensor switching transistor 42, and the second liquid crystal switching transistor 43. In Fig. 11, the semiconductor film 72 of the liquid crystal switching transistor 40 and the photo sensor switching transistor 42, and the semiconductor film 72 of the second liquid crystal switching transistor 43 are apart from each other. However, those semiconductor films 72 are connected to each other in a perspective direction of Fig. 11.

Further, the wiring line 11 and a portion 11a, which is a part of the wiring 11, function as a second light-shielding film, and are formed so as to cover an active region of the semiconductor film 72 of the photo sensor switching transistor 42 and the second liquid crystal switching transistor 43 in a height direction.

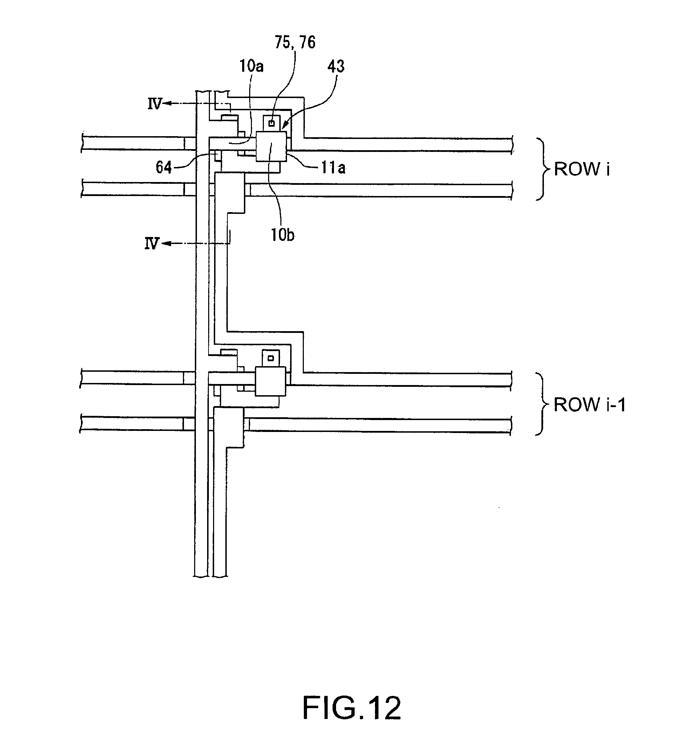

Next, a wiring structure of the pixel 16 included in the liquid crystal device of the second embodiment will be explained referring to Fig. 12. Fig. 12 is a partial plan view showing the wiring structure of the pixel 16 included in the liquid crystal device of the second embodiment. The sectional view shown in Fig. 11 nearly corresponds to a IV-IV line direction shown in Fig. 12. In order to facilitate understanding, the transparent conductive film and the pixel electrode are omitted.

As shown in the figure, the first light-shielding film 64 located in an under layer side of the semiconductor film 72 is arranged in a position to overlap with the active region of the semiconductor film portion of the liquid crystal switching transistor 40, the active region of the semiconductor film portion of the photo sensor switching transistor 42, and the active region of the semiconductor film portion of the second liquid crystal switching transistor 43.

The semiconductor film 72 is shared among the liquid crystal switching transistor 40 and the photo sensor switching transistor 42, and the second liquid crystal switching transistor 43. On a layer side further above the semiconductor film 72, the liquid crystal scan line 10 and the photo sensor scan line 12 are formed.

The portion 10a of the liquid crystal scan lines 10 being intersected with the semiconductor film 72, that is a portion serving as a gate electrode of the liquid crystal switching transistor 40, and a portion 10b serving as a gate electrode of the second liquid crystal switching transistor 43, and the portion 12a of the photo sensor scan line 12 being intersected with the semiconductor film 72, that is a portion serving as a gate electrode of the photo sensor switching transistor 42, are preferably formed with a transparent conductive member such as ITO.

Then, the wiring line 11 and the portion 11a are formed so as to cover the active region of the semiconductor film 72 of the photo sensor switching transistor 42 and the second liquid crystal switching transistor 43.

In the second embodiment, the contact holes 75 and 76 to electrically couple the semiconductor film 72 and the pixel electrode 48 are coupled to the other of the source/drain, e.g. a source (S), of the semiconductor film serving as the second liquid crystal switching transistor 43.

The forming steps of the wiring and so on is shown in Figs. 13 through 17. The forming steps will be described in brief according to the figures. The descriptions on the insulating films between the wirings are omitted.

First, the first light-shielding film 64 is formed in a predetermined position on the first substrate 60 (Fig. 13).

Next, the semiconductor film 72 is formed on a position in which a part of the semiconductor film 72 is overlapped with the first light-shielding film 64 (Fig. 14).

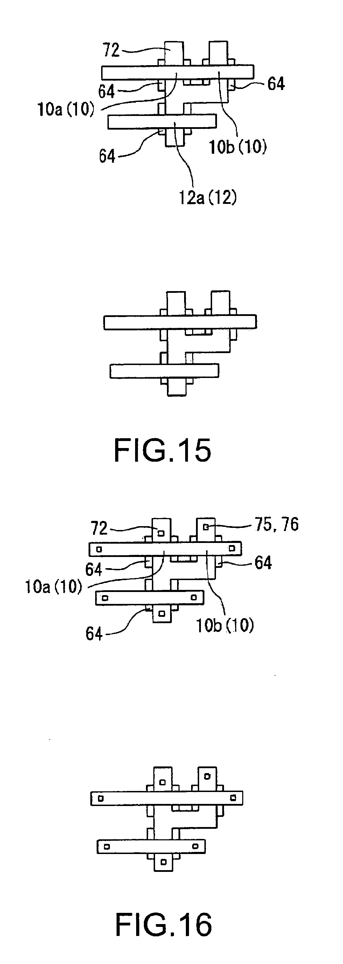

Next, on an upper layer of the semiconductor film 72, the portion 10a serving as the gate electrode of the liquid crystal switching transistor 40, the portion 10b serving as the gate electrode of the second liquid crystal switching transistor 43, and the portion 12a serving as the gate electrode of the photo sensor scan line 12 are formed (Fig. 15).

Next, the contact hole is formed in a predetermined position of an insulating film that is not shown (Fig. 16).

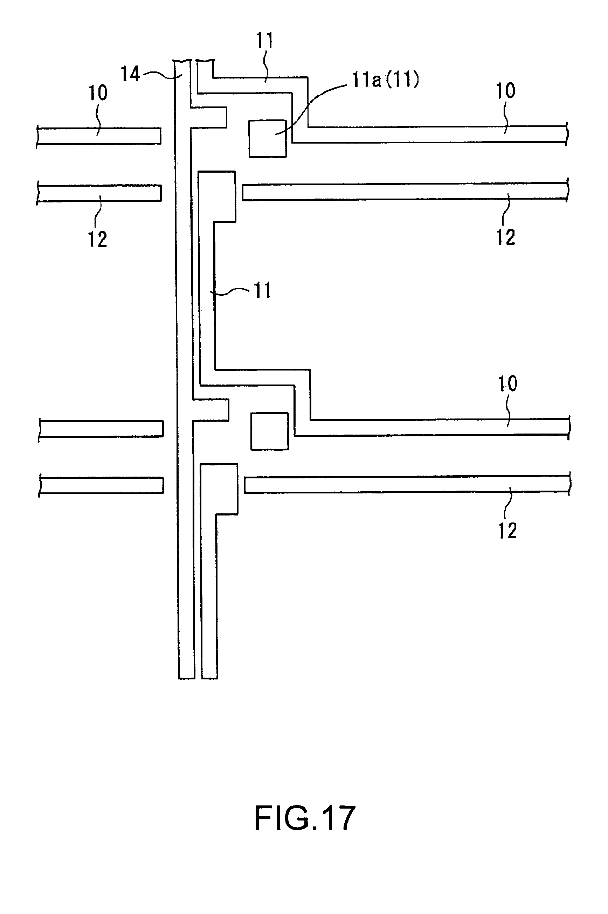

Then, the liquid crystal scan lines 10, the photo sensor scan lines 12, the signal lines 14, and the wirings 11 are formed (Fig. 17).

Through the above steps, the wiring structure of the pixel 16 shown in Fig. 14 is formed.

According to the liquid crystal device having the configuration as above, similarly to the first embodiment, light leak occurs on the liquid crystal switching transistor 40 being exposed to light, resulting in an off current whose size varies depending on illuminance. On the other hand, the second liquid crystal switching transistor 43 is sandwiched between the first light-shielding film 64 and the portion 11a, which is a part of the wiring 11. Therefore, when light is irradiated to the liquid crystal switching transistor 40, the second liquid crystal switching transistor 43 is not exposed to light, thereby light leak does not occur at the second liquid crystal switching. As a result, an off current does not occur.

Therefore, when the liquid crystal switching transistor 40 functions as a photo sensor, the second liquid crystal switching transistor 43 enables perfect switching.

As above, the liquid crystal device of the second embodiment has an advantage in which image disturbance is eliminated in a state allowing a light input (image pickup mode) in addition to advantageous effects similar to the first embodiment.

[Electronic Apparatus]

Next, an electronic apparatus equipped with the liquid crystal device described above will be described.

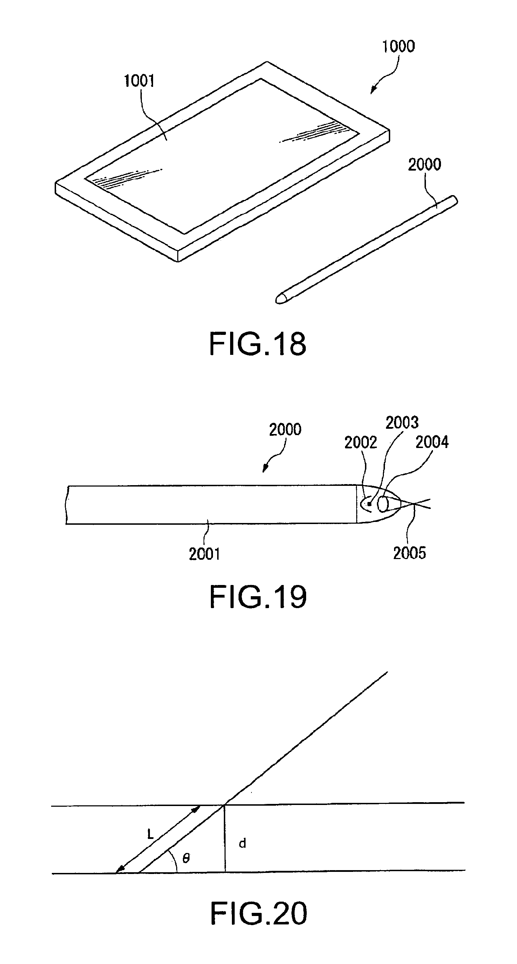

Fig. 18 is a perspective view illustrating a Personal Digital Assistant (PDA) 1000 as a kind of electronic apparatuses. The PDA 1000 includes the liquid crystal display device of the embodiments described above as a display 1001. Further, the PDA 1000 is provided with a pen type lighting system (light irradiation device) for a light input to the display 1001.

Fig. 19 shows a schematic view explaining a configuration example of the pen type lighting system. In Fig. 19, the configuration example of the pen type lighting system is shown in a plan view, and an end (a tip of the pen) is partially shown in a sectional view. A pen type lighting system 2000 shown in the figure includes a reflector 2002, a LED light source 2003, and a lens 2004 that are built-in in an end side of a main body 2001. Light radiated from the LED light source 2003 enters to the lens 2004 directly or by being reflected. The light entered is collected to a focal point 2005 by the lens 2004. The light collected at the focal point 2005 is radiated later. The LED light source 2003 is one of examples. Therefore, other light sources can be applicable. The pen type lighting system 2000 as above can give light with high illuminance at the focal point 2005 to the liquid crystal switching transistor 40 of the liquid crystal device.

Here, essential conditions to allow an input by writing with the pen type lighting system regardless of solar illumination depending on weather outside such as rainy weather and clear weather are examined. Solar illumination of rainy weather or dark weather is about 2000 lux, while solar illumination of clear weather is about 100,000 lux. On the other hand, an off current of a thin film transistor is proportional to an amount of light irradiated. The off current at 0 (zero) lux is 1 picoampere (pA), and one at 10,000 lux is about 10 pA, while the off current under sunlight of clear weather (100,000 lux of illumination) is about 100 pA. Further, if currently existing high illumination LED is used, illumination of a beam with 10 mm in diameter is about 100,000 lux. Therefore, if the diameter of the beam is narrowed down to 1 mm by the lens 2004, illumination at the focal point 2005 is about 10,000,000. That is, illumination obtained at the focal point 2005 is about 100 times more than that of clear weather. An off current of a thin film transistor with respect to the illumination at the focal point 2005 is about 10000 pA. This value is sufficient to determine if light is irradiated or not. Since a light emitting portion of a LED light source is normally about 0.2 mm by 0.2 mm, light can be focused into this size by the lens 2004. In this size, illumination can easily exceed one hundred million lux, and become 1000 times or more than that of solar light in clear weather.

Therefore, the off current of a thin film transistor becomes also 1000 times or more. Accordingly, the pen type lighting system 2000 enables inputting by writing under clear weather.

Here, a preferable range of a distance from the tip of the pen type lighting system 2000 to the focal point 2005 will be explained with reference to Fig. 20. A distance L between the tip of the pen and the liquid crystal switching transistor 40 as shown in the figure is represented by a following formula.

[Formula 1]

$$L = d\sqrt{\frac{1}{\tan^2\theta} + 1}$$

where a distance between the tip of the pen and the focal point 2005 is L, and a thickness of the second substrate 68 and the liquid crystal layer 52 of the liquid crystal device is d.

When an angle $\theta$ of 60 to 80 degrees, which is a range for an angle of a pen being naturally held by a human, is substituted, a favorable range of the distance L is $1.015d \leq L \leq 1.155d$. Therefore, it is preferable to use the lens 2004 having a focal length attaining the value above.

The liquid crystal device can be applied not only to PDAs, but also to cellular phones, electronic books, personal computers, digital still cameras, liquid crystal televisions, video tape recorders of viewfinder types or monitor viewing types, car navigation devices, pagers, electronic notebooks, electric calculators, word processors, work stations, picture phones, point-of-sale (POS) terminals, apparatuses equipped with a touch panel, and so on.

According to the electronic apparatuses described above, the following advantageous effects are provided.

Since the liquid crystal device of the embodiments above is applied as a display, the electronic apparatuses are provided with the display having a simple configuration and a photoelectric conversion function.

The electronic apparatuses described above are provided with the pen type lighting system 2000. Therefore, light is ensured to input to the liquid crystal device.

While the preferred embodiments of the liquid crystal device and the electronic apparatus according to the invention have been described with reference to the accompanied drawings, it is needless to say that the invention is not limited to the above embodiments. The shapes, combinations or the like of the components described in the above embodiments are presented by way of example. Various modifications can be made in accordance with design requirements or the like, without departing from the spirit and scope of the present invention.

For example, in the first embodiment above, the one electrode 74 (refer to Fig. 3) is formed on the wiring 11, and a configuration in which the one electrode 74 is used as a storage capacitor electrode of the storage capacitor 46 has been explained. By employing the configuration as above, large capacitance of the storage capacitor is realized, resulting in an advantageous effect to improve a grayscale level of the liquid crystal device 1.

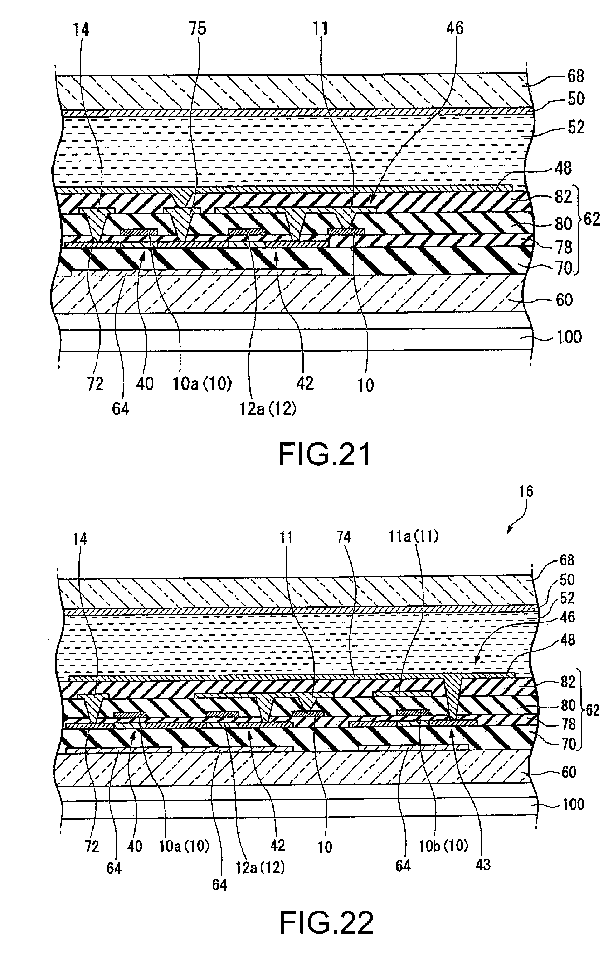

However, since small storage capacitance is enough for the liquid crystal device, the pixel electrode 48 (transparent electrode) and the wiring 11 (storage capacitor electrode) can serve as electrodes without forming the one electrode 74, then a second interlayer insulating film can be formed between them as a storage capacitor dielectric film as shown in Fig. 21.

By employing the configuration above, each one of the wiring layers and the insulating layers is reduced, thereby simplifying manufacturing steps. Further, since each one of the wiring layers and the insulating layers is reduced, transmissivity of light is increased, resulting in a bright display.

Further, in the second embodiment above, the pixel electrode 48 (transparent electrode) and the wiring 11 (storage capacitor electrode) can also serve as electrodes without forming the one electrode 74, then the second interlayer insulating film can be formed between them as the storage capacitor dielectric film as shown in Fig. 22.

By employing the configuration above, each one of the wiring layers and the insulating layers is reduced, manufacturing steps for the liquid crystal device in the second embodiment can be also simplified. Further, since each one of the wiring layers and the insulating layers is reduced, transmissivity of light is increased, resulting in a bright display.

Further, for example, it is possible that a plurality of ammeters are placed on the photo sensor signal readout circuit 26 so as to concurrently measure currents of different signal lines 14 with the plurality of ammeters, concurrently measuring currents from the plurality of pixels 16.

**Claims**

1. A liquid crystal device, comprising:

   a first scan line;
   a second scan line arranged in parallel with the first scan line;
   a signal line arranged to intersect with the first scan line;
   a pixel arranged in a matrix with respect to an intersection between the first scan line and the signal line, the pixel including:

   a first transistor having a gate coupled to the first scan line, a source, and a drain, one of the source and the drain being coupled to the signal line;
   a pixel electrode coupled to the other of the source and the drain of the first transistor;
   a common electrode disposed facing to the pixel electrode;
   a liquid crystal layer disposed between the pixel electrode and the common electrode;
   a second transistor having a gate coupled to the second scan line, a source, and a drain, one of the source and the drain being coupled to the other of the source and the drain of the first transistor, and the other of the source and the drain being coupled to a power source line; and
   a first light-shielding film covering one side of the first transistor and the second transistor.

2. The liquid crystal device according to Claim 1 further comprising a second light-shielding film covering the other side of the second transistor, wherein a light shielding member is not present on the other side of the first transistor.

3. A liquid crystal device, comprising:

   a first scan line;
   a second scan line arranged in parallel with the first scan line;
   a signal line arranged to intersect with the first scan line;
   a pixel arranged in a matrix with respect to an intersection between the first scan line and the signal line, the pixel including:

a first transistor having a gate coupled to the first scan line, a source, and a drain, one of the source and the drain being coupled to the signal line;

a pixel electrode coupled to the other of the source and the drain of the first transistor;

a common electrode disposed facing to the pixel electrode;

a liquid crystal layer disposed between the pixel electrode and the common electrode;

a second transistor having a gate coupled to the second scan line, a source, and a drain, one of the source and the drain being coupled to the other of the source and the drain of the first transistor, and the other of the source and the drain being coupled to a power source line;

a third transistor coupled to the first transistor in series between the signal line and the pixel electrode, the third transistor having a gate coupled to the first scan line, a source, and a drain, one of the source and the drain being coupled to the other of the source and the drain of the first transistor, and the other of the source and the drain coupled to the pixel electrode; and

a first light-shielding film covering one side of the first transistor, the second transistor, and the third transistor.

4. The liquid crystal device according to Claim 3 further comprising a second light-shielding film covering the other side of the second transistor and the third transistor, wherein a light shielding member is not present on the other side of the first transistor.

5. The liquid crystal device according to Claim 2, wherein the second light-shielding film is a wiring made of metal.

6. The liquid crystal device according to Claim 1, wherein the first transistor including a gate electrode being a transparent electrode.

7. The liquid crystal device according to Claim 1, wherein the first transistor is an offset transistor having an intrinsic region formed between a channel region and a source and/or drain region of the semiconductor film.

8. The liquid crystal device according to Claim 1, wherein the power source line is the first scan line of the pixel in a row direction.

9. The liquid crystal device according to Claim 1, wherein the pixel includes a storage capacitor having one electrode coupled to the other of the source and the drain of the first transistor, and another electrode coupled to the first scan line of the pixel adjacent to each other in a row direction.

10. The liquid crystal device according to Claim 3, wherein the pixel includes a storage capacitor having one electrode coupled to the other of the source and the drain of the third transistor, and another electrode coupled to the first scan line of the pixel adjacent to each other in a row direction.

11. The liquid crystal device according to Claim 9, wherein the storage capacitor includes the pixel electrode, a storage capacitor electrode, and a storage capacitor dielectric film sandwiched between the pixel electrode and the storage capacitor electrode, and the pixel electrode, the storage capacitor electrode, and the storage capacitor dielectric film are transparent.

12. The liquid crystal device according to Claim 1, further comprising:

a first scan driver coupled to one end of the first scan line;

a signal line driver coupled to one end of the signal line;

a second scan driver coupled to one end of the second scan line;

a switching circuit disposed between the signal line and the signal line driver and switching between a conductive state and a non-conductive state of the signal line and the signal line driver; and

a photo sensor signal readout circuit coupled to the other end of the signal line.

13. The liquid crystal device according to Claim 12, further comprising:

a controller controlling the first scan driver, the second scan driver, the signal line driver, the photo sensor signal readout circuit, and the switching circuit; and

a memory coupled with the controller, the controller storing data readout by the photo sensor signal readout circuit in the memory.

14. The liquid crystal device according to Claim 13, wherein the controller updates image data stored in the memory and supplies a control signal corresponding to the image data to the signal line driver based on the readout data.

15. The liquid crystal device according to Claim 13 further comprising an input unit coupled to the controller, wherein the controller controls the switching circuit so as to make the signal line and the signal line driver be in a non-conductive state and activates the photo sensor signal readout circuit if a predetermined operation command is input with the input unit.

16. The liquid crystal device according to Claim 13 further comprising an input unit coupled to the controller, wherein the controller controls the switching circuit so as to make the signal line and the signal line driver repeat a conductive state and a non-conductive state at predetermined time intervals if a predetermined operation command is input with the input unit, and activates the photo sensor signal readout circuit in a case where the signal line and the signal line driver are in the non-conductive state.

17. An electronic apparatus comprising the liquid crystal device according to Claim 1 as a display.

18. The electronic apparatus according to Claim 17 further comprising a lighting system for an optical input to the liquid crystal device.

EP 1 939 675 A2

FIG. 1

FIG. 2

FIG. 3

FIG. 4

64

64

# FIG. 5

72
64

72
64

# FIG. 6

FIG. 7

FIG. 8

FIG. 9

FIG.10

FIG.11

FIG.12

FIG.13

FIG.14

FIG.15

FIG.16

FIG.17

FIG.18

FIG.19

FIG.20

FIG.21

FIG.22

**EP 1 939 675 A2**

## REFERENCES CITED IN THE DESCRIPTION

### Patent documents cited in the description

- JP 2001292276 A

- JP 2006003857 A